# EUROPÄISCHE PATENTSCHRIFT

(11) **EP 3 078 928 B1**
(45) Veröffentlichungstag und Bekanntmachung des Hinweises auf die Patenterteilung: **13.09.2017**
(21) Anmeldenummer: 16000419.8
(22) Anmeldetag: 20.02.2016
(51) Int. Cl.: F27D 7/04, F27D 17/00, C21D 1/74, C21D 1/76

(54) **PROZESSGASAUFBEREITUNGSEINRICHTUNG ZUM AUFBEREITEN VON PROZESSGAS FÜR EINE INDUSTRIEOFENANLAGE, SOWIE INDUSTRIEOFENANLAGE ZUR GASAUFKOHLUNG UND ZUR HÄRTUNG VON METALLISCHEN WERKSTÜCKEN**
PROCESS GAS TREATMENT DEVICE FOR THE TREATMENT OF PROCESS GAS FOR AN INDUSTRIAL FURNACE INSTALLATION, AND INDUSTRIAL FURNACE INSTALLATION FOR GAS CARBURIZING AND FOR HARDENING OF METALLIC WORKPIECES
DISPOSITIF DE PRÉPARATION DE GAZ DE PROCÉDÉ POUR UNE INSTALLATION DE FOUR INDUSTRIEL, INSTALLATION DE FOUR INDUSTRIEL DESTINE À LA CÉMENTATION EN MILIEU GAZEUX ET AU DURCISSEMENT DE PIÈCES MÉTALLIQUES

(30) Priorität: 16.03.2015 DE 202015001980 U
(43) Veröffentlichungstag der Anmeldung: 12.10.2016
(73) Patentinhaber: Ipsen International GmbH, 47533 Kleve (DE)
(72) Erfinder: Joritz, Dirk, 46487 Wesel (DE); Bernhagen, Nils, 47533 Kleve (DE); Heisterkamp, Aloys, 47533 Kleve-Rindern (DE); Reinhold, Markus, 39179 Ebendorf (DE); Edenhofer, Bernd, 47533 Kleve (DE)
(74) Vertreter: Dennemeyer & Associates S.A.

(56) Entgegenhaltungen:
- US-A1- 2009 324 454

## Beschreibung

### Gebiet der Erfindung

Die Erfindung betrifft eine Prozessgasaufbereitungseinrichtung zum Aufbereiten von Prozessgas für eine Industrieofenanlage, umfassend einen Aufbereitungsreaktor, welcher einen beheizbaren, temperaturgeregelten Katalysator aufweist und dem zum einen über eine Zuführleitung verbrauchtes Prozessgas aus dem Industrieofen zuführbar, sowie aus dem zum anderen am Katalysator aufbereitetes Prozessgas über eine Rückführleitung zum Industrieofen abführbar ist, wobei dem Aufbereitungsreaktor in der Zuführleitung ein Verdichter vorgeschaltet ist, wobei der Aufbereitungsreaktor zudem mit Versorgungsleitungen verbunden ist, über welche dem Aufbereitungsreaktor Kohlenwasserstoff und Luft zuführbar ist, und wobei eine Steuereinrichtung vorgesehen ist, über die eine Prozessgasaufbereitung und -rückführung regelbar ist. Des Weiteren betrifft die Erfindung eine Industrieofenanlage zur Gasaufkohlung und zur Härtung von metallischen Werkstücken, welche eine vorgenannte Prozessgasaufbereitungseinrichtung umfasst.

### Stand der Technik

In Industrieofenanlagen kommen üblicherweise Prozessgase zum Einsatz, welche einem Schutz der Oberfläche des in dem jeweiligen Industrieofen zu behandelnden Werkstücks oder auch einer Veränderung der chemischen Zusammensetzung dieses Werkstücks dienen. So ist es bei der Härtung von metallischen Werkstücken bekannt, eine Aufkohlung des jeweiligen Werkstücks mit Hilfe des Prozessgases herbeizuführen, wobei sich das Prozessgas in diesem Fall dann häufig aus Schutzgas mit den Komponenten Kohlenstoffmonoxid, Wasserstoff und Stickstoff, Kohlenstoffdioxid, Sauerstoff und/oder Wasserdampf, sowie einem Anreicherungsgas mit Kohlenwasserstoffen für den aufkohlenden Prozess zusammensetzt. Dabei ist die Behandlungskammer des jeweiligen Industrieofens, in welchen das metallische Werkstück für den Aufkohlprozess und die Härtung eingebracht wird, unter Überdruck mit dem Prozessgas zu beaufschlagen, um einerseits ein ungewolltes Hineingelangen von Umgebungsluft zu verhindern und zum anderen einen für die Gasaufkohlung ausreichenden Kohlenstoffpegel in der Behandlungskammer zu garantieren.

Klassischerweise wird die Behandlungskammer des Industrieofens dabei mit Prozessgas gespült, dieses also kontinuierlich durch die Behandlungskammer geführt und nach einem Durchströmen der Kammer zu einer Abbrandstelle des Industrieofens geleitet, wo das abgeführte Prozessgas durch einen Zündbrenner sicher gezündet und verbrannt wird. Da dies jedoch einen entsprechend großen Verbrauch an Prozessgas zur Folge hat und zudem entsprechende Emissionen im Bereich des Industrieofens auftreten, sind auch Systeme bekannt, bei welchen Prozessgas in einem geschlossenen Kreislauf nach einem Durchströmen der Behandlungskammer des jeweiligen Industrieofens wieder aufbereitet wird und im Folgenden für eine erneute Zuführung zu der Behandlungskammer des Industrieofens zur Verfügung steht.

Aus der DE 10 2009 038 598 A1 ist eine Industrieofenanlage zur Gasaufkohlung und zur Härtung von metallischen Werkstücken bekannt, bei welcher im Bereich eines eine Behandlungskammer aufweisenden Industrieofens eine Prozessgasaufbereitungseinrichtung vorgesehen ist. Diese Prozessgasaufbereitungseinrichtung umfasst dabei einen Aufbereitungsreaktor mit einem Katalysator, wobei der Aufbereitungsreaktor über eine Zuführleitung mit der Behandlungskammer verbunden ist, so dass verbrauchtes Prozessgas aus der Behandlungskammer in den Aufbereitungsreaktor geführt werden kann. Zwischen dem Aufbereitungsreaktor und der Behandlungskammer des Industrieofens ist zudem eine Rückführleitung vorgesehen, welche einer Rückführung des am Katalysator aufbereiteten Prozessgases in die Behandlungskammer des Industrieofens dient, so dass die Behandlungskammer und der Aufbereitungsreaktor über die Zu- und die Rückführleitungen in einem geschlossenen Kreislauf verbunden sind. Des Weiteren kann dem Aufbereitungsreaktor über Versorgungsleitungen Kohlenwasserstoff und Luft zugeführt werden, um im Bereich des Katalysators das verbrauchte Prozessgas aufbereiten und einen gewünschten Kohlenstoffgehalt generieren zu können. Für eine Zuführung des verbrauchten Prozessgases zum Aufbereitungsreaktor, sowie eine Rückführung in die Behandlungskammer des Industrieofens ist in der Zuführleitung ein Verdichter vorgesehen, welcher über eine Steuereinrichtung gesteuert wird, die auch die Prozessgasaufbereitung und -rückführung regelt.

Ausgehend vom vorstehend beschriebenen Stand der Technik ist es nun die Aufgabe der vorliegenden Erfindung, eine Prozessgasaufbereitungseinrichtung für eine Industrieofenanlage zu schaffen, wobei über diese Prozessgasaufbereitungseinrichtung dabei eine Aufbereitung von verbrauchtem Prozessgas und eine Zuführung zum Industrieofen möglichst optimal gestaltet können werden soll.

### Offenbarung der Erfindung

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Eine Industrieofenanlage zur Gasaufkohlung und zur Härtung von metallischen Werkstücken, welche eine erfindungsgemäße Prozessgasaufbereitungseinrichtung umfasst, geht ferner aus den Ansprüchen 6 bis 10 hervor.

Gemäß der Erfindung umfasst eine Prozessgasaufbereitungseinrichtung einen Aufbereitungsreaktor, welcher einen beheizbaren, temperaturgeregelten Katalysator aufweist und dem zum einen über eine Zuführleitung verbrauchtes Prozessgas aus einem Industrieofen zugeführt, sowie aus dem zum anderen am Katalysator aufbereitetes Prozessgas über eine Rückführleitung zum Industrieofen abgeführt werden kann. In der Zuführleitung ist dann ein Verdichter vorgesehen, welcher dem Aufbereitungsreaktor dementsprechend vorgeschaltet ist, wobei der Aufbereitungsreaktor zudem mit Versorgungsleitungen verbunden ist, über welche dem Aufbereitungsreaktor Kohlenwasserstoff und Luft zugeführt werden kann. Schließlich ist noch eine Steuereinrichtung vorgesehen, über die eine Prozessgasaufbereitung und -rückführung regelbar ist.

Die vorgenannte Prozessgasaufbereitungseinrichtung ist dann insbesondere Teil einer Industrieofenanlage zur Gasaufkohlung und zur Härtung von metallischen Werkstücken, welche neben der Prozessgasaufbereitungseinrichtung einen Industrieofen mit einer Behandlungskammer umfasst. Dabei ist der Aufbereitungsreaktor der Prozessgasaufbereitungseinrichtung mit der Behandlungskammer des Industrieofens über die Zu- und die Rückführleitung in einem geschlossenen Kreislauf verbunden.

Im Sinne der Erfindung handelt es sich bei dem Prozessgas, welches der Behandlungskammer zur Gasaufkohlung zugeführt wird, insbesondere um ein aus einem Trägergas und einem Anreicherungsgas bestehendes Gas. Dabei basiert das Trägergas auf Kohlenmonoxid und Wasserstoff, während es sich bei dem Anreicherungsgas um Kohlenwasserstoff handelt. Die Gasaufkohlung und Härtung von metallischen Werkstücken im Industrieofen wird dann auf dem Fachmann prinzipiell bekannte Art und Weise mit Hilfe des Prozessgases durchgeführt wie es auch in der DE 10 2009 038 598 A1 beschrieben ist, deren Offenbarungsgehalt hiermit explizit einbezogen wird. Auch die Aufbereitung des verbrauchten Prozessgases im Aufbereitungsreaktor der Prozessgasaufbereitungseinrichtung erfolgt auf dem Fachmann prinzipiell bekannte Art und Weise in Form einer Kohlenstoffpegelanreicherung, wobei die in der DE 10 2009 038 598 A1 genannten Reaktionen, wie

2CH₄ + O₂ → 2CO + 4H₂

CH₄ + CO₂ → 2CO + 2H₂

CH₄ + H₂O → CO + 3H₂

, ablaufen und in der Folge eine Anreicherung mit Kohlenstoff stattfindet.

Eine Überwachung des Kohlenstoffpegels wird dabei im Bereich der Behandlungskammer des Industrieofens kontinuierlich bevorzugt über eine Sauerstoffsonde und ein Thermoelement auf Basis einer Sauerstoffpartialdruckmessung durchgeführt. Wird dabei durch die permanente Wechselwirkung des Prozessgases mit einer Oberfläche des oder der Werkstücke und dem damit einhergehenden Kohlenstoffentzug des Gases eine Absenkung des Kohlenstoffpegels festgestellt, so erfolgt eine entsprechende Anreicherung seitens der Prozessgasaufbereitungseinrichtung durch Zuführung von Kohlenwasserstoff, bevorzugt in Form von Erdgas.

Die Prozessgasaufbereitung und -rückführung in die Behandlungskammer des Industrieofens wird dabei durch die Steuereinrichtung der Prozessgasaufbereitungseinrichtung überwacht und geregelt, bei welcher es sich bevorzugt um elektronische, rechnergestützte und programmierbare Steuerung handelt. Zu diesem Zweck wird diese mit entsprechenden Parametern des Industrieofens versorgt, wie unter anderem eben dem aktuellen Kohlenstoffpegel in der Behandlungskammer, der dort vorherrschenden Temperatur, etc. Des Weiteren steht die Steuereinrichtung insbesondere mit einem Manometer in Verbindung, über welches ein in der Behandlungskammer vorherrschender Druck kontinuierlich gemessen und überwacht wird. Wird dabei eine Abweichung von einem vorgegebenen Solldruck erfasst, so kann eine Erhöhung durch entsprechende Zugabe von Kohlenwasserstoffgas und Luft in den Aufbereitungsreaktor realisiert bzw. eine Erniedrigung durch kurzzeitige Abführung von Prozessgas aus dem geschlossenen Kreislauf realisiert werden.

Die Erfindung umfasst nun die technische Lehre, dass in der Zuführleitung der Prozessgasaufbereitungseinrichtung zudem ein Absperrventil vorgesehen ist, über welches eine Zuführung von verbrauchtem Prozessgas zum Aufbereitungsreaktor unterbrochen werden kann. Ferner überprüft die Steuereinrichtung einen Funktionszustand des Katalysators mittels Druckdifferenzmessung und kann gezielt einen Ausbrennvorgang in diesem einleiten. Mit anderen Worten ist also die Zuführleitung zum Aufbereitungsreaktor mit einem Absperrventil versehen, über welches die Zuführleitung verschlossen und dementsprechend ein Strömen von verbrauchtem Prozessgas in den Aufbereitungsreaktor unterbunden werden kann. Des Weiteren überwacht die Steuereinrichtung den Katalysator des Aufbereitungsreaktors, indem am Katalysator eine Differenzdruckmessung durchgeführt wird. Wird dabei erkannt, dass sich der Katalysator zugesetzt hat, so wird ein Ausbrennvorgang im Katalysator durch die Steuereinrichtung eingeleitet.

Eine derartige Ausgestaltung einer Prozessgasaufbereitungseinrichtung hat dabei den Vorteil, dass zum einen durch das Absperrventil gezielt eine Zuführung von verbrauchtem Prozessgas zum Aufbereitungsreaktor unterbunden werden kann, so dass die Versorgung des Industrieofens allein durch das im Aufbereitungsreaktor durch Zuführung von Luft und Kohlenwasserstoff neu hergestellte Prozessgas erfolgt. Zum anderen kann durch die kontinuierliche Überwachung des Katalysators durch die Steuereinrichtung und den ggf. eingeleiteten Ausbrennvorgang eine permanente Funktionstüchtigkeit des Katalysators sichergestellt werden. Insgesamt kann hierdurch das Verfahren einer Prozessgasaufbereitung optimal gestaltet werden.

Im Unterschied dazu ist bei der DE 10 2009 038 598 A1 kein Absperrventil in der Zuführleitung zum Aufbereitungsreaktor und dementsprechend keine Absperrmöglichkeit dieser Leitung vorgesehen. Insofern ist es hier nicht möglich, das Strömen von verbrauchtem Prozessgas zum Aufbereitungsreaktor gezielt zu unterbinden. Ferner findet auch keine Überwachung eines Funktionszustandes des Katalysators statt und es werden eben auch keine gezielten Ausbrennzyklen desselbigen eingeleitet.

Entsprechend einer Ausführungsform der Erfindung ist dem Verdichter in der Zuführleitung ein Kühler vorgeschaltet. Vorteilhafterweise kann hierdurch das aus der Behandlungskammer des Industrieofens abgeführte, verbrauchte Prozessgas vor dem Verdichter abgekühlt werden, so dass zum einen eine Beeinträchtigung des Verdichters durch das ansonsten noch heiße Prozessgas vermindert und zum anderen ein ungewollter Zerfall des Prozessgases infolge einer langsamen Abkühlung verhindert wird. Erfindungsgemäß kann es sich bei dem Kühler um einen einfachen Wärmetauscher handeln, insbesondere in Form eines mäanderförmigen Verlaufs einer Leitung, an welchem ein Wärmeaustausch mit der Umgebungsluft des Industrieofens möglich ist. Besonders bevorzugt ist bei einem derartig gestalteten Wärmetauscher aber noch zusätzlich ein Gebläse vorgesehen, so dass Umgebungsluft über den Wärmetauscher zwangsgeführt wird.

Entsprechend einer weiteren Ausgestaltungsmöglichkeit der Erfindung sind in den Versorgungsleitungen für Kohlenstoff und Luft Massenstromregler vorgesehen, über welche die Zuführungen von Kohlenwasserstoff und Luft zum Aufbereitungsreaktor jeweils steuerbar sind. Eine derartige Ausgestaltung hat dabei den Vorteil, dass eine Zuführung von Luft bzw. Kohlenwasserstoff zum Aufbereitungsreaktor mit Hilfe des jeweiligen Massenstromreglers damit fein geregelt werden kann.

In Weiterbildung der Erfindung steht die Steuereinrichtung mit dem Verdichter, dem Absperrventil und den Massenstromreglern in Verbindung und regelt diese jeweils. Ist im Bereich des Verdichters zudem ein Kühler mit einer regelbaren Komponente, wie beispielsweise einem Gebläse vorgesehen, so kann auch diese Komponente mit der Steuereinrichtung verbunden sein, um über die Steuereinrichtung entsprechend geregelt zu werden.

Gemäß einer weiteren Ausführungsform der Erfindung sind der Aufbereitungsreaktor, der Verdichter, die Massenstromregler, das Absperrventil und die Steuereinrichtung in einem gemeinsamen Gehäuse aufgenommen. Ist zudem wiederum ein Kühler im Bereich des Verdichters vorgesehen, so ist dieser bevorzugt ebenfalls in diesem Gehäuse platziert. Insbesondere wird dies realisiert, wenn die Prozessgasaufbereitungseinrichtung im Rahmen einer Ausgestaltungsmöglichkeit einer Industrieofenanlage außen am jeweiligen Industrieofen vorgesehen ist. Eine Zusammenfassung der vorgenannten Komponenten in einem gemeinsamen Gehäuse kann aber prinzipiell auch realisiert sein, wenn die Prozessgasaufbereitungseinrichtung in den Industrieofen integriert ist.

Im Rahmen einer Ausführungsform der Erfindung, bei welcher die Prozessgasaufbereitungseinrichtung zumindest teilweise in den Industrieofen integriert ist, ist der Aufbereitungsreaktor aber bevorzugt unter der Behandlungskammer platziert, während die Massenstromregler für den Aufbereitungsreaktor in einer Gasmischbatterie des Industrieofens sitzen und die Steuereinrichtung in einem Schaltschrank des Industrieofens verbaut ist. Hierdurch ist eine besonders kompakte Integration der Prozessgasaufbereitungseinrichtung möglich.

Generell ist bei der Platzierung der Prozessgasaufbereitungseinrichtung außen am jeweiligen Industrieofen eine Nachrüstung bei bereits bestehenden Industrieofen möglich, während die zumindest teilweise Integration insbesondere bei neu hergestellten Industrieöfen zur Anwendung kommen kann.

Entsprechend einer weiteren Ausführungsform einer Industrieofenanlage ist die Behandlungskammer zudem über eine Abgasableitung mit einer Abbrandstelle verbunden, wobei die Abgasableitung mit einem Ventil versehen ist, über welches die Abgasableitung im Zuge der Prozessgasaufbereitung abgesperrt werden kann. Hierdurch kann durch Absperren der Prozessgasableitung verhindert werden, dass verbrauchtes Prozessgas zur Abbrandstelle gelangt, anstelle wie gewollt zur Prozessgasaufbereitungseinrichtung geleitet zu werden. Eine Zuführung von Prozessgas zur Abbrandstelle kann dann aber gezielt eingeleitet werden, wenn ein Druck in der Behandlungskammer einen vorgegebenen Sollwert überschreitet. Besonders bevorzugt kann dabei die Steuereinrichtung der Prozessgasaufbereitungseinrichtung auf das Absperrventil in der Abgasableitung regelnd zugreifen. Dabei sollte das Ventil in der Abgasableitung gasdicht sein.

In Weiterbildung der Erfindung sind die Zu- und die Rückführleitung an einer Prozessgaslanze in die Behandlungskammer geführt. Hierdurch kann eine geeignete Zuführung von verbrauchtem Prozessgas zur Prozessgasaufbereitungseinrichtung und Rückführung in die Behandlungskammer des Ofens dargestellt werden. Abgesehen davon ist es im Rahmen der Erfindung aber auch denkbar, die Zu-und Abführung von Prozessgas an auseinanderliegenden Punkten zu realisieren oder aber auch jeweils mehrere Punkte für die Zu- und Abführung von Prozessgas vorzusehen.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausführungsformen der Erfindung, die nachfolgend erläutert werden, sind in den Zeichnungen dargestellt. Es zeigt:
- Fig. 1: eine schematische Ansicht einer Industrieofenanlage mit einer Prozessgasaufbereitungseinrichtung entsprechend einer ersten Ausführungsform der Erfindung; und
- Fig. 2: eine schematische Darstellung einer Industrieofenanlage mit einer erfindungsgemäßen Prozessgasaufbereitungseinrichtung gemäß einer zweiten Ausgestaltungsmöglichkeit der Erfindung.

### Ausführliche Beschreibung der Zeichnungen

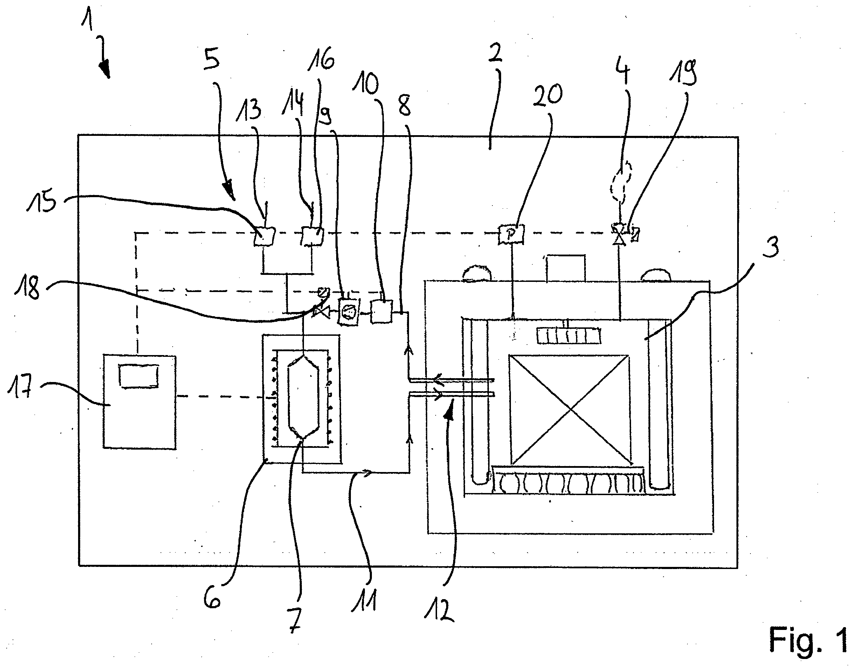

Aus Fig. 1 geht eine schematische Ansicht einer Industrieofenanlage 1 entsprechend einer ersten Ausführungsform der Erfindung hervor, wobei diese Industrieofenanlage 1 einen Industrieofen 2 umfasst, bei welchem eine Behandlungskammer 3 zur Wärmebehandlung von metallischen Werkstücken vorgesehen ist. Die Wärmebehandlung wird dabei so gestaltet, dass eine Gasaufkohlung und Härtung der in die Behandlungskammer 3 eingebrachten Werkstücke stattfindet, wie sie dem Fachmann prinzipiell bekannt ist. Hierzu wird die Behandlungskammer 3 kontinuierlich mit einem Prozessgas unter Überdruck versorgt, wobei sich dieses Prozessgas aus einem Trägergas basierend auf Kohlenmonoxid und Wasserstoff und einem Anreicherungsgas in Form von Kohlenwasserstoff zusammensetzt.

Vorliegend wird die Behandlungskammer 3 dabei nicht mit dem Prozessgas gespült, d. h. das der Behandlungskammer 3 zugeführte Prozessgas wird nicht anschließend an einer Abbrandstelle 4 abgefackelt, sondern es erfolgt eine Aufbereitung des bei der Gasaufkohlung verbrauchten Prozessgases. Zu diesem Zweck ist die Industrieofenanlage 1 mit einer Prozessgasaufbereitungseinrichtung 5 ausgestattet, die über einen Aufbereitungsreaktor 6 verfügt.

In diesem Aufbereitungsreaktor 6 ist ein Katalysator 7 vorgesehen, an welchem die Aufbereitung des Prozessgases durch entsprechende Anreicherung mit Kohlenstoff stattfindet. Dabei wird das verbrauchte Prozessgas aus der Behandlungskammer 3 über eine Zuführleitung 8 zum Aufbereitungsreaktor 6 und damit zum Katalysator 7 geführt, wobei die Zuführung dabei über einen Verdichter 9 gestaltet wird, dem ein Kühler 10 vorgeschaltet ist. Der Kühler 10 ist dabei als Wärmetauscher mit Gebläse gestaltet, wobei über das Gebläse entsprechende Umgebungsluft des Industrieofens 2 über den Wärmetauscher geführt wird.

Das im Katalysator 7 aufbereitete Prozessgas wird über eine Rückführleitung 11 wieder zur Behandlungskammer 3 geführt, wobei die Zuführleitung 8 und die Rückführleitung 11 an einer Prozessgaslanze 12 in die Behandlungskammer 3 einmünden. Des Weiteren führen noch Versorgungsleitungen 13 und 14 zum Aufbereitungsreaktor 6, wobei über die Versorgungsleitung 13 Kohlenwasserstoff und über die Versorgungsleitung 14 Luft zum Aufbereitungsreaktor 6 geführt werden kann. Eine Zuführung über die Versorgungsleitungen 13 und 14 wird dabei über je einen Massenstromregler 15 bzw. 16 vorgenommen, über den die jeweils über die jeweilige Versorgungsleitung 13 bzw. 14 strömende Gasmenge genau einstellbar ist.

Die Prozessgasaufbereitung und deren Rückführung in die Behandlungskammer 3 wird dabei über eine Steuereinrichtung 17 der Prozessgasaufbereitungseinrichtung 5 geregelt und gesteuert, welche als elektronische, rechnergestützte und programmierbare Steuerung vorliegt. Dabei steht die Steuereinrichtung 17 sowohl mit dem Katalysator 7, als auch mit dem Verdichter 9 und dem Kühler 10, sowie den Massenstromreglern 15 und 16 in Verbindung und kann diese entsprechend regeln. Ferner hat die Steuereinrichtung 17 Zugriff auf zwei Absperrventile 18 und 19, von welchen das Absperrventil 18 in der Zuführleitung 8 sitzt, während das Absperrventil 19 vor der Abbrandstelle 4 vorgesehen ist. Schließlich steht die Steuereinrichtung 17 auch noch mit einem Manometer 20 in Verbindung, über welches der Druck in der Behandlungskammer 3 kontinuierlich überwacht wird. Des Weiteren werden der Steuereinrichtung 17, vorliegend nicht weiter dargestellt, weitere Parameter der Behandlungskammer 3 übermittelt, wie insbesondere die aktuelle Temperatur in der Kammer 3, sowie ein Kohlenstoffgehalt des dort befindlichen Prozessgases.

Die Rückführung von Prozessgas über die Rückführleitung 11 wird in Abhängigkeit des Drucks in der Behandlungskammer 3 durch die Steuereinrichtung 17 geregelt. Wird hierbei erfasst, dass wenn ein zu geringer Druck vorherrscht, der Druck durch entsprechende Zugabe von Kohlenwasserstoffgas und Luft über die Versorgungsleitungen 13 und 14 erhöht wird. Wird hingegen erkannt, dass ein zu hoher Druck vorherrscht, so wird das Absperrventil 19 geöffnet und durch Abbrennen von Prozessgas an der Abbrandstelle 4 der Druck reduziert.

Des Weiteren kann die Steuereinrichtung 17 gezielt das Absperrventil 18 und damit die Zuführleitung 8 absperren, so dass kein verbrauchtes Prozessgas in den Aufbereitungsreaktor 6 nachströmen kann. In diesem Fall erfolgt eine Begasung der Behandlungskammer 3 allein durch in dem Aufbereitungsreaktor 6 durch entsprechende Versorgung über die Versorgungsleitungen 13 und 14 neu erzeugtes Prozessgas.

Die Steuereinrichtung 17 überwacht ferner kontinuierlich den Funktionszustand des Katalysators 7, indem im Bereich des Katalysators 7 eine Druckdifferenzmessung durchgeführt wird. Wird hier eine zu starke Beladung des Katalysators 7 festgestellt, so löst die Steuereinrichtung 17 gezielt einen Ausbrennzyklus aus, so dass der Katalysator 7 entsprechend frei gebrannt wird.

Vorliegend ist die Prozessgasaufbereitungseinrichtung 5 vollständig in den Industrieofen 2 integriert. Konkret ist dies dadurch realisiert, dass der Aufbereitungsreaktor 6 baulich unterhalb der Behandlungskammer 3 vorgesehen ist, während die Massenstromregler 13 und 14 in einer Gasmischbatterie des Industrieofens 2 und die Steuereinrichtung 17 in einem Schaltschrank desselbigen verbaut sind.

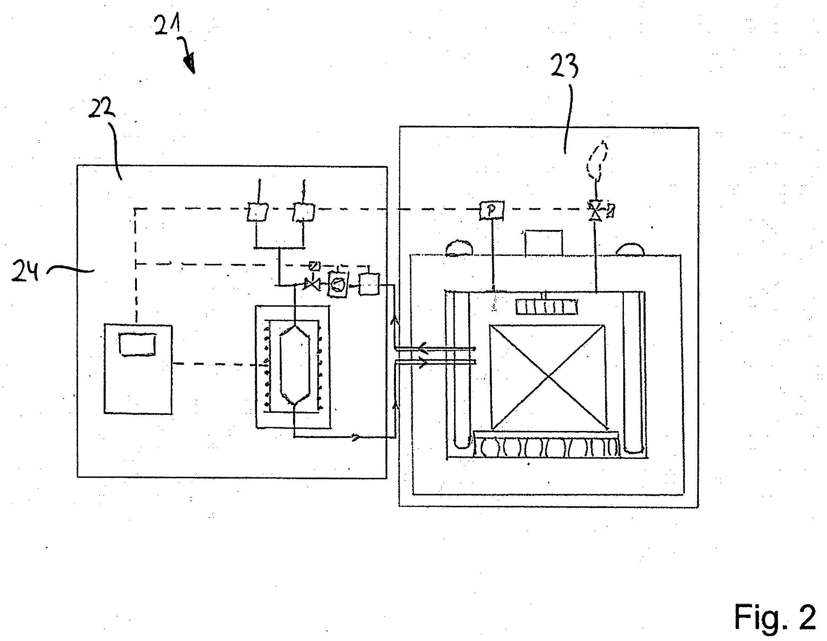

Aus Fig. 2 geht eine zweite Ausgestaltungsmöglichkeit einer Industrieofenanlage 21 hervor, welche dabei im Wesentlichen der Variante aus Fig. 1 entspricht. Einziger Unterschied ist dabei, dass eine Prozessgasaufbereitungseinrichtung 22 nicht in einen Industrieofen 23 integriert, sondern als separate Einheit an diesem angebaut ist. Zu diesem Zweck sind die bereits zu der Variante von Fig. 1 beschriebenen Komponenten der Prozessgasaufbereitungseinrichtung 22 in einem Gehäuse 24 verbaut, welches entsprechend an dem Industrieofen 23 angeordnet ist. Im Übrigen entspricht die Ausgestaltung nach Fig. 2 der Variante nach Fig. 1, so dass auf das hierzu Beschriebene Bezug genommen wird.

Mittels der erfindungsgemäßen Ausgestaltung einer Prozessgasaufbereitungseinrichtung, sowie einer diese aufweisenden Industrieofenanlage kann eine Prozessgasaufbereitung optimal gestaltet werden.

### Bezugszeichenliste

- 1: Industrieofenanlage
- 2: Industrieofen
- 3: Behandlungskammer
- 4: Abbrandstelle
- 5: Prozessgasaufbereitungseinrichtung
- 6: Aufbereitungsreaktor
- 7: Katalysator
- 8: Zuführleitung
- 9: Verdichter
- 10: Kühler
- 11: Rückführleitung
- 12: Prozessgaslanze
- 13: Versorgungsleitung
- 14: Versorgungsleitung
- 15: Massenstromregler
- 16: Massenstromregler
- 17: Steuereinrichtung
- 18: Absperrventil
- 19: Absperrventil
- 20: Manometer
- 21: Industrieofenanlage
- 22: Prozessgasaufbereitungseinrichtung
- 23: Industrieofen
- 24: Gehäuse

## Patentansprüche

1. Prozessgasaufbereitungseinrichtung (5; 22) zum Aufbereiten von Prozessgas für eine Industrieofenanlage (1; 21), umfassend einen Aufbereitungsreaktor (6), welcher einen beheizbaren, temperaturgeregelten Katalysator (7) aufweist und dem zum einen über eine Zuführleitung (8) verbrauchtes Prozessgas aus einem Industrieofen (2; 23) zuführbar, sowie aus dem zum anderen am Katalysator (7) aufbereitetes Prozessgas über eine Rückführleitung (11) zum Industrieofen (2; 23) abführbar ist, wobei dem Aufbereitungsreaktor (6) in der Zuführleitung (8) ein Verdichter (9) vorgeschaltet ist, wobei der Aufbereitungsreaktor (6) zudem mit Versorgungsleitungen (13, 14) verbunden ist, über welche dem Aufbereitungsreaktor (6) Kohlenwasserstoff und Luft zuführbar ist, und wobei eine Steuereinrichtung (17) vorgesehen ist, über die eine Prozessgasaufbereitung und -rückführung regelbar ist, **dadurch gekennzeichnet, dass** in der Zuführleitung (8) zudem ein Absperrventil (18) vorgesehen ist, über welches eine Zuführung von verbrauchtem Prozessgas zum Aufbereitungsreaktor (6) unterbrechbar ist, und dass ein Funktionszustand des Katalysators (7) durch die Steuereinrichtung (17) mittels Druckdifferenzmessung überprüfbar und gezielt ein Ausbrennvorgang in diesem einleitbar ist.

2. Prozessgasaufbereitungseinrichtung (5; 22) nach Anspruch 1, **dadurch gekennzeichnet, dass** dem Verdichter (9) ein Kühler (10) in der Zuführleitung (8) vorgeschaltet ist.

3. Prozessgasaufbereitungseinrichtung (5; 22) nach Anspruch 1, **dadurch gekennzeichnet, dass** in den Versorgungsleitungen (13, 14) Massenstromregler (15, 16) vorgesehen sind, über welche die Zuführungen von Kohlenwasserstoff und Luft zum Aufbereitungsreaktor (6) jeweils steuerbar sind.

4. Prozessgasaufbereitungseinrichtung (5; 22) nach Anspruch 3, **dadurch gekennzeichnet, dass** die Steuereinrichtung (17) mit dem Verdichter (9), dem Absperrventil (18) und den Massenstromreglern (15, 16) in Verbindung steht und diese jeweils regelt.

5. Prozessgasaufbereitungseinrichtung (22) nach Anspruch 3, **dadurch gekennzeichnet, dass** der Aufbereitungsreaktor (6), der Verdichter (9), die Massenstromregler (15, 16), das Absperrventil (18) und die Steuereinrichtung (17) in einem gemeinsamen Gehäuse (24) aufgenommen sind.

6. Industrieofenanlage (1; 21) zur Gasaufkohlung und zur Härtung von metallischen Werkstücken, umfassend einen Industrieofen (2; 23) mit einer Behandlungskammer (3) und eine Prozessgasaufbereitungseinrichtung (5; 22) nach einem oder mehreren der Ansprüche 1 bis 5, wobei der Aufbereitungsreaktor (6) der Prozessgasaufbereitungseinrichtung (5; 22) mit der Behandlungskammer (3) des Industrieofens (2; 23) über die Zu- (8) und die Rückführleitung (11) in einem geschlossenen Kreislauf verbunden ist.

7. Industrieofenanlage (1; 21) nach Anspruch 6, **dadurch gekennzeichnet, dass** die Behandlungskammer (3) zudem über eine Abgasableitung mit einer Abbrandstelle (4) verbunden ist, wobei die Abgasableitung mit einem Absperrventil (19) versehen ist, über welches die Abgasableitung im Zuge der Prozessgasaufbereitung absperrbar ist.

8. Industrieofenanlage (1; 21) nach Anspruch 6, **dadurch gekennzeichnet, dass** die Zu- (8) und die Rückführleitung (11) an einer Prozessganzlanze (12) in die Behandlungskammer (3) geführt sind.

9. Industrieofenanlage (1) nach Anspruch 6, **dadurch gekennzeichnet, dass** die Prozessgasaufbereitungseinrichtung (5) zumindest teilweise in den Industrieofen (2) integriert ist.

10. Industrieofenanlage (21) nach Anspruch 6, **dadurch gekennzeichnet, dass** die Prozessgasaufbereitungseinrichtung (22) außen am Industrieofen (23) vorgesehen ist.

## Claims

1. Process gas treatment device (5; 22) for treating process gas for an industrial furnace installation (1; 21), comprising a treatment reactor (6), which comprises, on the one hand, a heatable temperature-controlled catalytic converter (7) to receive the consumed process gas from an industrial furnace (2; 23) via a supply line (8), as well as, on the other hand, to receive the process gas treated by the catalytic converter (7) and supply it to the industrial furnace (2; 23) via a return line (11), wherein the treatment reactor (6) is connected upstream of a compressor (9) in the supply line (8), wherein the treatment reactor (6) is also connected to the supply lines (13, 14), via which hydrocarbons and air may be supplied to the treatment reactor (6), and wherein a control device (17) is provided to control the process gas treatment and recycling,
**characterized in that**
a shut-off valve (18) is also provided in the supply line (8) via which the supply of consumed process gas to the treatment reactor (6) may be interrupted, while a functional state of the catalytic converter (7) may be checked by the control device (17) by means of a pressure difference measurement and a burn-off operation may be initiated in a targeted manner.

2. Process gas treatment device (5; 22) according to claim 1,
**characterized in that**
a cooler (10) is connected upstream of the compressor (9) in the supply line (8).

3. Process gas treatment device (5; 22) according to claim 1,
**characterized in that**
mass flow regulators (15, 16) are provided in the supply lines (13, 14), via which the supplies of hydrocarbons and air to the treatment reactor (6) may be controlled.

4. Process gas treatment device (5; 22) according to claim 3,
**characterized in that**
the control device (17) is connected to the compressor (9), the shut-off valve (18) and the mass flow controllers (15, 16) and respectively regulates these.

5. Process gas treatment device (22) according to claim 3,
**characterized in that**
the processing reactor (6), the compressor (9), the mass flow regulators (15, 16), the shut-off valve (18) and the control device (17) are housed in a common housing (24).

6. Industrial furnace installation (1; 21) for gas carburizing and for hardening metallic workpieces, comprising an industrial furnace (2; 23) with a treatment chamber (3) and a process gas treatment device (5; 22) according to one or more of the claims 1 to 5, wherein the treatment reactor (6) of the process gas treatment device (5; 22) is connected to the treatment chamber (3) of the industrial furnace (2; 23) via the supply (8) and the return line (11).

7. Industrial furnace installation (1; 21) according to claim 6,
**characterized in that**
the treatment chamber (3) is also connected to a burn-off element (4) via an exhaust gas discharge line, wherein the exhaust gas discharge line is provided with a shut-off valve (19) via which the exhaust gas discharge line may be shut off in the course of the process gas treatment.

8. Industrial furnace installation (1; 21) according to claim 6,
**characterized in that**
the supply line (8) and the return line (11) are led to a processing lance (12) in the treatment chamber (3).

9. Industrial furnace installation (1) according to claim 6,
**characterized in that**
the process gas treatment device (5) is at least partially integrated into the industrial furnace (2).

10. Industrial furnace installation (21) according to claim 6,
**characterized in that**
the process gas treatment device (22) is provided on the outside of the industrial furnace (23).

## Revendications

1. Equipement de préparation de gaz de procédé (5 ; 22) destiné à la préparation de gaz de procédé pour une installation de four industriel (1 ; 21), comprenant un réacteur de préparation (6) qui présente un catalyseur (7) pouvant être chauffé, régulé en température, et auquel d'une part du gaz de procédé usé peut être acheminé à partir d'un four industriel (2 ; 23) par le biais d'une conduite d'amenée (8) et à partir duquel d'autre part du gaz de procédé préparé sur le catalyseur (7) peut être évacué par le biais d'une conduite de retour (11) vers le four industriel (2 ; 23), un compresseur (9) étant monté en amont du réacteur de préparation (6) dans la conduite d'amenée (8), le réacteur de préparation (6) étant en outre raccordé à des conduites d'alimentation (13, 14) par le biais desquelles un hydrocarbure et de l'eau peuvent être acheminés au réacteur de préparation (6), et un équipement de commande (17) étant prévu, par le biais duquel une préparation et un retour du gaz de procédé peuvent être régulés, **caractérisé en ce que**, dans la conduite d'amenée (8), il est en outre prévu une vanne d'arrêt (18) par le biais de laquelle un acheminement de gaz de procédé usé vers le réacteur de préparation (6) peut être interrompu, et **en ce qu'**un état de fonctionnement du catalyseur (7) peut être vérifié par l'équipement de commande (17) au moyen d'une mesure de différence de pression, et **en ce qu'**un processus de combustion peut être lancé dans le catalyseur.

2. Equipement de préparation de gaz de procédé (5 ; 22) selon la revendication 1, **caractérisé en ce qu'**un refroidisseur (10) peut être monté en amont du compresseur (9) dans la conduite d'amenée (8).

3. Equipement de préparation de gaz de procédé (5 ; 22) selon la revendication 1, **caractérisé en ce que**, dans les conduites d'alimentation (13, 14), il est prévu des régulateurs de débit massique (15, 16) par le biais desquels les acheminements d'hydrocarbure et d'air vers le réacteur de préparation (6) peuvent être respectivement commandés.

4. Equipement de préparation de gaz de procédé (5 ; 22) selon la revendication 3, **caractérisé en ce que** l'équipement dé commande (17) est en liaison avec le compresseur (9), la vanne d'arrêt (18) et les régulateurs de débit massique (15, 16) et régule respectivement ceux-ci.

5. Equipement de préparation de gaz de procédé (5 ; 22) selon la revendication 3, **caractérisé en ce que** le réacteur de préparation (6), le compresseur (9), les régulateurs de débit massique (15, 16), la vanne d'arrêt (18) et l'équipement de commande (17) sont logés dans un carter (24) commun.

6. Installation de four industriel (1 ; 21) destinée à la cémentation gazeuse et au durcissement de pièces métalliques, comprenant un four industriel (2 ; 23) avec une chambre de traitement (3) et un équipement de préparation de gaz de procédé (5 ; 22) selon l'une ou plusieurs des revendications 1 à 5, le réacteur de préparation (6) de l'équipement de préparation de gaz de procédé (5 ; 22) étant raccordé à la chambre de traitement (3) du four industriel (2 ; 23) par le biais de la conduite d'amenée (8) et de la conduite de retour (11) dans un circuit fermé.

7. Installation de four industriel (1 ; 21) selon la revendication 6, **caractérisée en ce que** la chambre de traitement (3) est en outre raccordée à un emplacement de combustion (4) par le biais d'une conduite d'évacuation des fumées, la conduite d'évacuation des fumées étant munie d'une vanne d'arrêt (19) par le biais de laquelle la conduite d'évacuation des fumées peut être fermée au cours de la préparation de gaz de procédé.

8. Installation de four industriel (1 ; 21) selon la revendication 6, **caractérisée en ce que** la conduite d'amenée (8) et la conduite de retour (11) sont guidées sur une lance de gaz de procédé (12) dans la chambre de traitement (3).

9. Installation de four industriel (1) selon la revendication 6, **caractérisée en ce que** l'équipement de préparation de gaz de procédé (5) est intégré au moins partiellement dans le four industriel (2).

10. Installation de four industriel (21) selon la revendication 6, **caractérisée en ce que** l'équipement de préparation de gaz de procédé (22) est prévu à l'extérieur sur le four industriel (23).
